# EUROPEAN PATENT SPECIFICATION

(11) **EP 0 557 259 B1**
(45) Date of publication and mention of the grant of the patent: **18.12.1996**
(21) Application number: 93830064.7
(22) Date of filing: 22.02.1993
(51) Int. Cl.: H01M 4/96, H01M 4/88

(54) **Gas diffusion electrode for electrochemical cell and process of preparing same**
Gasdiffusionselektrode und Verfahren zur Herstellung derselben
Electrode à diffusion gazeuse pour cellule électrochimique et procédé de fabrication

(30) Priority: 21.02.1992 JP 72484/92
(43) Date of publication of application: 25.08.1993
(73) Proprietor: Tanaka Kikinzoku Kogyo K.K., Chuo-ku Tokyo (JP); Watanabe, Masahiro, Kofu-shi, Yamanashi (JP)
(72) Inventor: Watanabe,Masahiro, Yamanashi (JP); Hara,Noriaki, Shinmachi,Hiratsuka-shi Kanagawa (JP); Tsurumi,Kazunori, Shinmachi,Hiratsuka-shi Kanagawa (JP)
(74) Representative: Pellegri, Alberto

(56) References cited:
- EP-A- 0 410 946
- EP-A- 0 447 735
- FR-A- 2 179 637
- US-A- 4 031 033
- CHEMISTRY LETTERS no. 7, July 1991, TOKYO JP pages 1113 - 1116 MASAHIRO WATANABE ET AL 'A New Wet-proof Technique of Gas-diffusion Electrodes'
- PATENT ABSTRACTS OF JAPAN vol. 12, no. 101 (E-595)2 April 1988
- EXTENDED ABSTRACTS vol. 90, no. 2, 1990, PRINCETON, NEW JERSEY US page 135 M. WATANABE ET AL 'A MODERN WET-PROOFING TECHNIQUE OF CARBON AND ITS PROPERTY FOR GAS-DIFFUSION ELECTRODES - ABSTRACT NR 86'
- PATENT ABSTRACTS OF JAPAN vol. 11, no. 198 (E-519)25 June 1987

## Description

### Background of the Invention

The present invention relates to a gas diffusion electrode for such an electrochemical cell as a fuel cell employing liquid as an electrolyte such as a phosphoric acid type fuel cell and a process of preparing same.

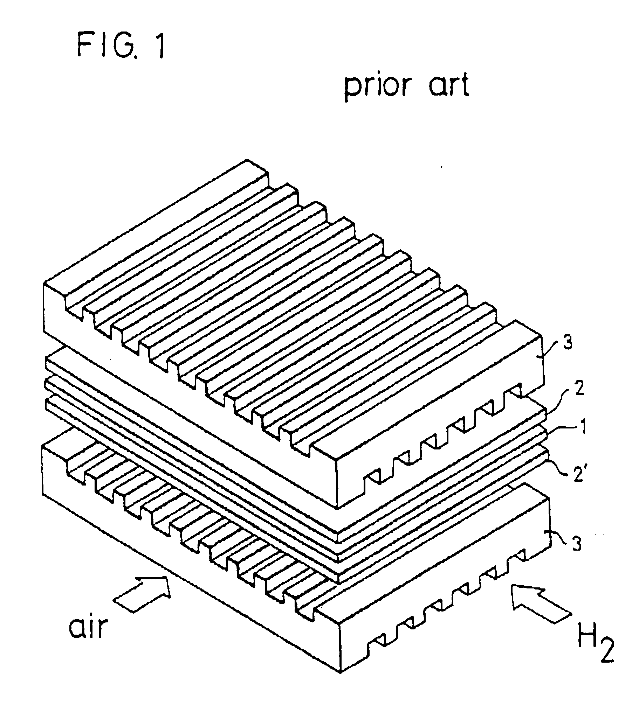

A phosphoric acid type fuel cell is formed by the integration of a unit cell, for example as shown in Fig.1, by disposing a pair of gas diffusion electrodes 2,2', that is, an porous anode (negative pole) and a cathode (positive pole) on the respective sides of an electrolyte 1 prepared by impregnating a porous matrix formed by binding silicon carbide with a small amount of fluorine resin with liquid phosphoric acid, and further disposing on the rear of the respective gas diffusion electrodes 2,2' two separators equipped with ribs (interconnectors having grooves) 3,3' functioning as a current collector and a gas supplier.

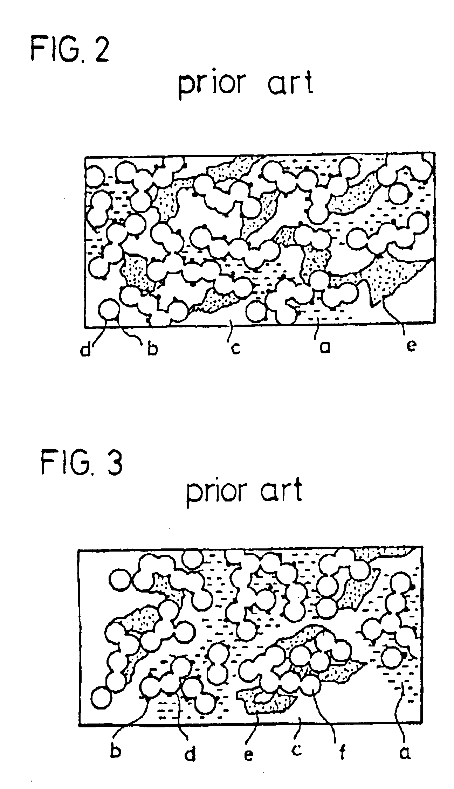

The conventional anode and cathode are the gas diffusion electrodes which include a porous semi-hydrophobic catalyst layer prepared by thermally binding catalyst supported carbon black and hydrophobic polytetrafluoroethylene (hereinafter referred to as "PTFE") mixed in the form of polyflon (polyflon being a trademark of DuPont de Nemours) dispersion to a supporting layer such as carbon paper. Fig.2 is an enlarged schematic view of the porous catalyst layer. A Pt catalyst (b) in contact with an electrolyte shown in Fig.2 participates in an electrode reaction. In order to swiftly proceed the catalytic reaction, the sufficient supply of a reaction gas (c) to the Pt catalyst (b) is indispensable. The hydrophobic PTFE (c) mixed in the form of the polyflon dispersion as a binding agent of the catalyst-supported carbon black forms a gas supply network to the Pt catalyst (b) by means of its hydrophobicity. In order to assure the sufficient gas supplying ability, the addition of the sufficient amount of the hydrophobic PTFE is required.

However, the excessive addition of PTFE (e) increases the number of particles of the Pt catalyst (b) which are not in contact with the electrolyte (a) to lower the utilization rate of the Pt catalyst particles. As a result, the lowering of the characteristics takes place. As long as the conventional electrode structure is employed, the elevations of the catalyst utilization rate and of the gas supplying ability are contradictory to each other, and the improvement of the electrode characteristics by the optimization of the amount of PTFE added may be limited.

In order to improve these prior art drawbacks, the separation of the function of the catalyst layer has been proposed [J. Electroanalytical Chemistry, Vol.197, P195-208 (1986)]. The catalyst structure shown therein is schematically illustrated in Fig.3. This structure is formed by pressing and sintering two kinds of powder of the catalyst-supported carbon black (d) and the catalyst non-supported carbon black (f) for implementing the separation of the two functions of the catalyst layer, i.e. electrolyte network and gas network. Since no PTFE (e) is present at the portion of the catalyst-supported carbon black (d), it exhibits perfect hydrophilicity (network function for electrolyte) so that even the 100 % utilization of the Pt catalyst (b) particles may be realized. Since the amount of PTFE (e) added to the catalyst-non-supported carbon black containing no catalyst particles in the powder can be increased in comparison to the normal catalyst layer, more perfect gas supply network may be formed. It is demonstrated in the above literature, J. Electroanalytical Chemistry, that by optimizing the ratio of the catalyst-supported carbon black (d) to the catalyst non-supported carbon black (f), not only the optimization of the ratio of the electrolyte network to the gas supply network but also the theoretical limit of the electrode characteristics can be attained.

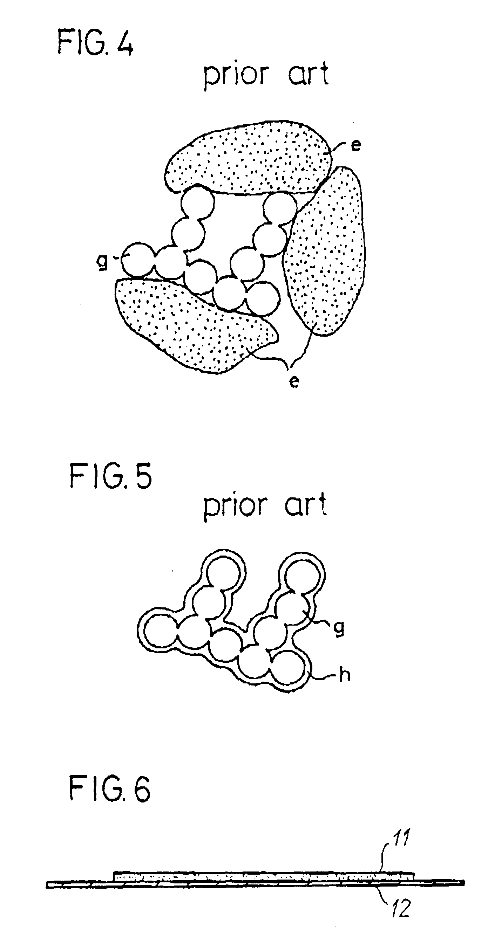

However, even in the above technology newly proposed as well as in the conventional technology, the lowering of the gas supplying ability with operation time due to the permeation of the electrolyte into the gas supply network occurs to lower the electrode performances. It is known especially in the conventional technology that the abrupt lowering of the performances takes place after the operation of 10,000 to 20,000 hours. This is because the particle size of PTFE (e) employed is about ten times that of the carbon black (g) as schematically shown in Fig.4. Since the carbon surface which is likely to be wetted with the electrolyte cannot be completely covered with the particles of PTFE (e), the electrolyte may permeate into this portion to prevent the gas supply to the catalyst particles to take place the abrupt decrease of the electrode performances. In order to overcome these problems, a method of providing complete hydrophobicity to the carbon black (g) has been developed which comprises covering the carbon black (g) with a thin layer of hydrophobic fluorine resin film (h) [Chemistry Letters, P1113-1116 (1991), USP No. 5, 137, 754].

### Summary of the Invention

It is an object of the present invention to provide a gas diffusion electrode for such an electrochemical cell as a fuel cell having a long life and high performances and a process of preparing same.

It is another object of the present invention to provide a gas diffusion electrode for a fuel cell having a long life and high performances which can be realized by employing carbon black of complete hydrophobicity and a process of preparing same.

The present invention is a gas diffusion electrode for an electrochemical cell which comprises a catalyst layer formed by binding the mixture of catalyst-supported carbon black and catalyst-non-supported carbon black hydrophobically treated with a hydrophobic fluorinated compound thin layer by means of PTFE in the form of polyflon dispersion, the catalyst layer being integrated on a substrate such as carbon paper.

A first and a second processes of the present invention comprises adding PTFE in the form of polyflon dispersion to either of catalyst-supported carbon black and catalyst-non-supported carbon black hydrophobically treated with a hydrophobic fluorinated compound thin layer followed by drying, mixing this mixture with the other carbon black, applying the resulting mixture on a substrate such as carbon paper and forming a porous electrode having a catalyst layer on the substrate by pressing the substrate under heating.

A third process of this invention comprises adding PTFE in the form of polyflon dispersion to the mixture of the two kinds of the carbon black, applying the resulting mixture on a substrate and forming a porous electrode having a catalyst layer on the substrate by pressing the substrate under heating.

Since the carbon black employed for the formation of the gas network in the catalyst layer of the gas diffusion electrode having the above constitution in accordance with the present invention is completely hydrophobically treated, no electrolyte permeates this portion and the carbon black exhibits high hydrophobicity so that the wet-proofing is maintained even after the long operation period to enable the gas supply to the catalyst particles so as to provide the gas diffusion electrode with a long life and high electrode performances.

In accordance with the processes of this invention, the above excellent gas diffusion electrode can be prepared with high accuracy and the mass production thereof may be suitably carried out.

### Brief Description of the Drawings

Fig.1 is a broken perspective view showing one example of a conventional phosphoric acid type fuel cell.

Fig.2 is a schematic view showing a catalyst layer of a conventional gas diffusion electrode.

Fig.3 is a schematic view showing a catalyst layer of another conventional gas diffusion electrode having a new structure.

Fig.4 is a schematic view showing a particle structure of conventional carbon black hydrophobically treated with ordinary PTFE.

Fig.5 is a schematic view showing a particle structure of conventional carbon black covered with a hydrophobic fluorinated compound thin layer.

Fig.6 is a schematic cross sectional view of one embodiment of a gas diffusion electrode of the present invention.

Fig.7 is a graph showing the discharge characteristics of an air-hydrogen phosphoric acid cell at 200 mA/cm² employing the gas diffusion electrode of an Example of this invention.

Fig.8 is a graph showing the results of accelerated wet test of the gas diffusion electrode prepared in an Example employed as a cathode to phosphoric acid.

### Detailed Description of the Invention

The completely hydrophobic carbon black may be prepared as follows. Liquid which has been made by dispersing polyethylene having an average molecular weight of preferably between 100,000 and 500,000, most preferably around 250,000, in an organic solvent, and carbon black are mixed and dried. The mixture is thermally treated so that the polyethylene is made to be a thin layer covering the surface of the carbon black. Then the polyethylene is completely fluorinated at 60 °C by an excessive fluorine gas diluted with an inert gas. Thus, the hydrophobic carbon black having approximately 50 % in weight of fluorinated polyethylene is obtained.

Then, mixed power of this hydrophobic carbon black and, for example, a ternary alloy catalyst on acetylene based carbon black is dispersed in a solvent. While this dispersion is stirred, PTFE in the form of polyflon is added dropwise thereto and mixed to make an aggregate. The average particle size of this aggregate prepared employing the catalyst-supported carbon black is 0.01 to 10 µm, preferably 0.1 to 0.5 µm. When an aggregate is prepared employing the catalyst-non-supported carbon black, the average particle size thereof is 0.3 to 20 µm, preferably 0.5 to 5 µm. After this mixture is filtered on such a substrate as carbon paper to form a catalyst layer thereon, the substrate is sintered to produce a porous gas diffusion electrode.

The both average aggregated sizes of the catalyst-supported carbon black and catalyst non-supported carbon black are 0.01 µm to 10 µm, preferably 0.1 µm to 1 µm. The average particle size of PTFE is preferably 0.1 µm to 1 µm.

The weight ratio range of the both carbon black is 8:2 to 2:8, preferably 7:3 to 3:7.

As mentioned, PTFE is added to the carbon black in the form of polyflon for effective dispersion. The amount of PTFE with respect to 100 portions of the carbon black of the dry powder is not more than 70 portions, preferably 20 portions to 70 portions.

In one embodiment of this invention shown in Fig.6 prepared in accordance with the foregoing, a catalyst layer 11 consisting of catalyst-supported carbon black, catalyst-non-supported carbon black and PTFE is formed on the surface of carbon paper 12.

### Example

### Example 1

Liquid which had been made by dispersing 2 % in weight of commercially available polyethylene having an average molecular weight of 250,000 in n-hexane, and commercially available acetylene-based carbon black (primary average particle size: 40 nm, specific surface area: 65 m²/g, average particle size of aggregate: 0.5 µm) were mixed and dried. Then the mixture was thermally treated so that the polyethylene was made to be a thin layer covering the surface of the carbon black (polyethylene: 30 % in weight). Then the polyethylene was completely fluorinated at 60 °C by a fluorine gas of twice stoichiometric amount diluted with a nitrogen gas. Thus, the hydrophobic carbon black having approximately 50 % in weight of fluorinated polyethylene was obtained.

Then, mixed powder of this hydrophobic carbon black and a available ternary alloy catalyst (20 % in weight) including platinum on acetylene-based carbon black (primary average particle size: 30 nm, specific surface area: 300 m²/g, average particle size of aggregate: 0.3 µm) was dispersed in 500 ml of a mixed solvent of isopropanol/water=1:1 so that the total carbon black weight included in the both powder became 100 mg. The ratio was expressed as a weight ratio of all the carbon black to the fluorinated polyethylene which was permitted to change within the range between 10/3 and 10/9. While this dispersion was stirred, commercially available PTFE in the form of polyflon was added dropwise thereto and mixed to make an aggregate. The amount of PTFE added was permitted to change within the range of 5 to 70 portions with respect to 100 portions of all the carbon black. After this mixture was filtered on commercially availablo PAN-based carbon paper (porosity: 70 %, thickness: 0.4 mm) previously hydrophobically treated with 30 % in weight of PTFE, which was then press-molded at 20 kg/cm², the mixture was sintered at 340 °C for 20 minutes in a nitrogen atmosphere furnace to produce a porous gas diffusion electrode for an anode or a cathode.

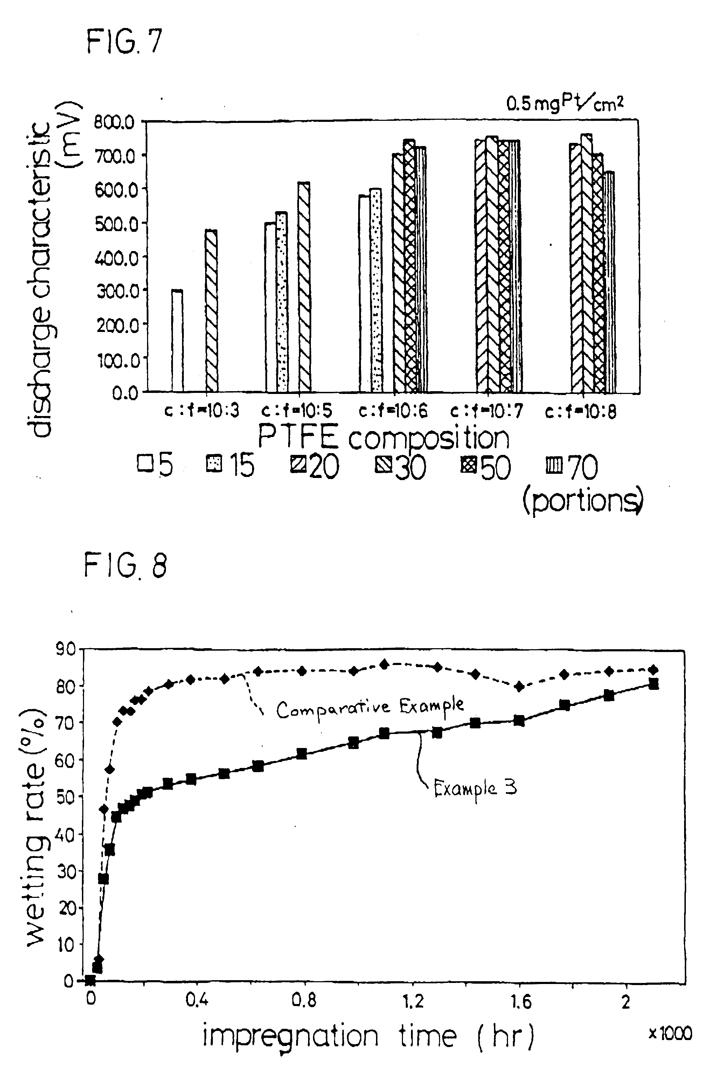

The discharge charactoristics of an air-hydrogen phosphoric acid type cell employing the gas diffusion electrode prepared in Example 1 is illustrated in Fig.7. The maximum discharge characteristics were obtained in the range between 10/6 and 10/8 of all the carbon black (c)/the fluorinated polyethylene (f) and in the range between 20 and 70 portions of PTFE with respect to 100 portions of all the carbon black.

### Example 2

After 70 mg of the hydrophobic carbon black of Example 1 was dispersed in 50 ml of a mixed solvent of isopropanol/water=1:1, 40 portions of PTFE in the form of polyflon dispersion (average particle size: 0.3 µm) with respect to 100 portions of the carbon black was added dropwise to and mixed with the mixed solvent. The mixed liquid was filtered, dried and reduced to powder. The average aggregate size of this powder was adjusted to 1 µm. Thereafter, this powder and 36 mg of the above-mentioned commercially available catalyst powder were mixed by means of a blender. After the mixture was applied on PAN based carbon paper hydrophobically treated in accordance with the procedures already mentioned, it was press-molded at 20 kg/cm² and further heated at 340 °C for 20 minutes in a nitrogen atmosphere furnace to produce a porous gas diffusion electrode.

Similar degrees of the discharge characteristics to those of Example 1 were obtained in the gas diffusion electrode of Example 2.

### Example 3

After 36 mg of the above-mentioned catalyst was dispersed in 50 ml of a mixed solvent of isopropanol/water=1:1, 40 portions of PTFE in the form of polyflon dispersion with respect to 100 portions of the carbon black in the catalyst-supported carbon black was added dropwise to and mixed with the mixed solvent. The resulting mixed liquid was filtered, dried and reduced to powder. The average aggregate size of this powder was adjusted to 2 µm. Thereafter, this powder and 70 mg of the above-mentioned hydrophobic carbon black were mixed by means of a blender. After the mixture was applied on PAN-based carbon paper hydrophobically treated in accordance with the procedures already mentioned, it was press-molded at 20 kg/cm² and further heated at 340 °C for 20 minutes in a nitrogen atmosphere furnace to produce a porous gas diffusion electrode.

Similar degrees of the discharge characteristics to those of Example 1 were obtained in the gas diffusion electrode of Example 3.

These characteristics are superior to those of conventional ones by about 20 mV.

The results of accelerated wet test of the gas diffusion electrode prepared in Example 3 employed as a cathode to phosphoric acid (205 °C, 105 %. H₃PO₄) are shown in Fig.8 together with the test results of a conventional gas diffusion electrode employed as a cathode in which only PTFE was employed as an agent providing hydrophobicity to the catalyst-supported carbon black. While not less than 80 % of the pores were filled with an electrolyte in 200 hours in the conventional electrode, the electrode of Example exhibited higher hydrophobicity than that of the conventional one even after 2000 hours. It is apparent that the wet-resistance is remarkably improved.

## Claims

1. A gas diffusion electrode for an electrochemical cell comprising a substrate and a catalytic layer bonded thereto, composed of a mixture of catalyst-supporting carbon black and catalyst-nonsupporting carbon black, the latter having been made hydrophobic by coating it with a polyethylene that has been completely fluorinated by fluorine gas, and a hydrophobic polytetrafluoroethylene binder which is admixable to the carbon blacks in the form of a polyflon® dispersion, characterized in that:
the ratio between all the carbon black and said fluorinated compound is comprised between 10/6 and 10/8.

2. The gas diffusion electrode according to claim 1, wherein said substrate is a carbon paper.

3. A process of preparing a gas diffusion electrode for an electrochemical cell as defined in claim 1, which comprises adding hydrophobic polytetrafluoroethylene in the form of polyflon® dispersion to catalyst-supporting carbon black followed by drying, mixing the said dried mixture with catalyst-non-supporting carbon black made hydrophobic by coating with a completely fluorinated polyethylene thin layer, applying this mixture on a substrate and forming a porous electrode having a catalyst layer on the substrate by pressing the substrate under heating.

4. A process of preparing a gas diffusion electrode for an electrochemical cell as defined in claim 1, which comprises adding hydrophobic polytetrafluoroethylene in the form of polyflon® dispersion to catalyst-non-supporting carbon black made hydrophobic by coating with a completely fluorinated polyethylene thin layer followed by drying, mixing the said dried mixture with catalyst-supporting carbon black, applying this mixture on a substrate and forming a porous electrode having a catalyst layer on the substrate by pressing the substrate under heating.

5. A process of preparing a gas diffusion electrode for an electrochemical cell as defined in claim 1, which comprises adding hydrophobic polytetrafluoroethylene in the form of polyflon® dispersion to the mixture of catalyst-supporting carbon black and catalyst-non-supporting carbon black made hydrophobic by coating with a completely fluorinated polyethylene thin layer, applying this mixture on a substrate and forming a porous electrode having a catalyst layer on the substrate by pressing the substrate under heating.

6. A process of preparing a gas diffusion electrode for an electrochemical cell as defined in claim 1, which comprises adding hydrophobic polytetrafluoroethylene in the form of polyflon® dispersion to the mixture of catalyst-supporting carbon black and catalyst-non-supporting carbon black made hydrophobic by coating with a completely fluorinated polyethylene thin layer followed by drying, applying this mixture on a substrate and forming a porous electrode having a catalyst layer on the substrate by pressing the substrate under heating.

## Patentansprüche

1. Gasdiffusionselektrode für eine elektrochemische Zelle, umfassend eine Träger- und eine daran gebundene katalytische Schicht, die aus einer Mischung von Katalysator tragendem Kohlenstoffschwarz und keinen Katalysator tragendem Kohlenstoffschwarz besteht, wobei letzteres hydrophob gemacht wurde, indem es mit Polyethylen beschichtet wurde, das mit Fluorgas vollständig fluoriert ist, und ein hydrophobes Polytetrafluorethylen-Bindemittel, das mit Kohlenstoffschwarz mischbar ist, in Form einer Polyflon®-Dispersion, dadurch gekennzeichnet, daß:
das Verhältnis zwischen dem gesamten Kohlenstoffschwarz und der fluorierten Verbindung zwischen 10/6 und 10/8 beträgt.

2. Gasdiffusionselektrode nach Anspruch 1, wobei der Träger Kohlepapier ist.

3. Verfahren zur Herstellung einer Gasdiffusionselektrode für eine elektrochemische Zelle nach Anspruch 1, welches umfaßt: Zusetzen von hydrophobem Polytetrafluorethylen in Form einer Polyflon®-Dispersion zu Katalysator tragendem Kohlenstoffschwarz, anschließendes Trocknen, Mischen der getrockneten Mischung mit keinen Katalysator tragendem Kohlenstoffschwarz, das hydrophob gemacht wurde, indem es mit einer dünnen Schicht von vollständig fluoriertem Polyethylen beschichtet wurde, Aufbringen dieser Mischung auf einen Träger und Formen einer porösen Elektrode mit der Katalysatorschicht auf dem Träger durch Pressen des Trägers unter Erwärmen.

4. Verfahren zur Herstellung einer Gasdiffusionselektrode für eine elektrochemische Zelle nach Anspruch 1, welches umfaßt: Zusetzen von hydrophobem Polytetrafluorethylen in Form einer Polyflon®-Dispersion zu keinen Katalysator tragendem Kohlenstoffschwarz, das hydrophob gemacht wurde, indem es mit einer dünnen Schicht von vollständig fluoriertem Polyethylen überzogen und anschließend getrocknet wurde, Mischen der getrockneten Mischung mit Katalysator tragendem Kohlenstoffschwarz, Aufbringen dieser Mischung auf einen Träger und Formen einer porösen Elektrode mit der Katalysatorschicht auf dem Träger durch Pressen des Trägers unter Erwärmen.

5. Verfahren zur Herstellung einer Gasdiffusionselektrode für eine elektrochemische Zelle nach Anspruch 1, welches umfaßt: Zusetzen von hydrophobem Polytetrafluorethylen in Form einer Polyflon®-Dispersion zu einer Mischung von Katalysator tragendem Kohlenstoffschwarz und keinen Katalysator tragendem Kohlenstoffschwarz, das hydrophob gemacht wurde, indem es mit einer dünnen Schicht von vollständig fluoriertem Polyethylen überzogen wurde, Aufbringen dieser Mischung auf einen Träger und Formen einer porösen Elektrode mit einer Katalysatorschicht auf dem Träger durch Pressen des Trägers unter Erwärmen.

6. Verfahren zur Herstellung einer Gasdiffusionselektrode für eine elektrochemische Zelle nach Anspruch 1, welches umfaßt: Zusetzen von hydrophobem Polytetrafluorethylen in Form einer Polyflon®-Dispersion zu einer Mischung aus Katalysator tragendem Kohlenstoffschwarz und keinen Katalysator tragendem Kohlenstoffschwarz, das hydrophob gemacht wurde, indem es mit einer dünnen Schicht von vollständig fluoriertem Polyethylen überzogen und anschließend getrocknet wurde, Aufbringen dieser Mischung auf einen Träger und Formen einer porösen Elektrode mit einer Katalysatorschicht auf dem Träger durch Pressen des Trägers unter Erwärmen.

## Revendications

1. Electrode à diffusion de gaz pour une cellule électrochimique comportant un substrat et une couche catalytique qui adhère au substrat, composé par une mélange de noir de carbone qui supporte un catalyseur et un noir de carbone qui ne supporte pas un catalyseur, ce dernier ayant été rendu hydrophobe par revêtement avec un polyéthylène qui a été totalement fluoruré par du fluor gazeux, et par un liant hydrophobe de polytétrafluoroéthylène qui peut être mélangé aux noirs de carbone sous forme d'une dispersion de polyflon®, caractérisé en ce que:
le rapport entre tout le noir de carbone et ledit composant fluoruré est compris entre 10/6 et 10/8.

2. Electrode à diffusion de gaz selon la revendication 1, dans lequel ledit substrat est une papier à carbone.

3. Procédé pour la préparation d'un électrode à diffusion de gaz pour une cellule électrochimique selon la revendication 1, comprenant l'addition de polytétrafluoroéthylène hydrophobe sous forme d'une dispersion de polyflon® au noir de carbone qui supporte un catalyseur, suivie par séchage, la mélange de ladite mélange séchée avec le noir de carbone qui ne supporte pas un catalyseur et rendu hydrophobe, par revêtement avec une couche mince de polyéthylène totalement fluoruré, l'application de cette mélange à un substrat et la formation d'un électrode poreux ayant une couche catalytique sur le substrat par pression du substrat sous chauffage.

4. Procédé pour la préparation d'un électrode à diffusion de gaz pour une cellule électrochimique selon la revendication 1, qui comprend l'addition de polytétrafluoroéthylène hydrophobe sous forme d'une dispersion de polyflon® au noir de carbone qui ne supporte pas un catalyseur, et rendu hydrophobe par revêtement avec une couche mince de polyéthylène totalement fluoruré, suivie par séchage, la mélange de ladite mélange séchée avec le noir de carbone qui supporte un catalyseur, l'application de cette mélange à un substrat et la formation d'un électrode poreux ayant une couche catalytique sur le substrat par pression du substrat sous chauffage.

5. Procédé pour la préparation d'un électrode à diffusion de gaz pour une cellule électrochimique selon la revendication 1, qui comprend l'addition de polytétrafluoroéthylène hydrophobe sous forme d'une dispersion de polyflon® à la mélange de noir de carbone qui supporte un catalyseur et de noir de carbone qui ne supporte pas un catalyseur, ce dernier ayant été rendu hydrophobe par revêtement avec une couche mince de polyéthylène totalement fluoruré, l'application de cette mélange à un substrat et la formation d'un électrode poreux ayant une couche catalytique sur le substrat par pression du substrat sous chauffage.

6. Procédé pour la préparation d'un électrode à diffusion de gaz pour une cellule électrochimique selon la revendication 1, qui comprend l'addition de polytétrafluoroéthylène hydrophobe sous forme d'une dispersion de polyflon® à la mélange de noir de carbone qui supporte un catalyseur et de noir de carbone qui ne supporte pas un catalyseur, ce dernier ayant été rendu hydrophobe par revêtement avec une couche mince de polyéthylène totalement fluoruré, suivie par séchage, l'application de cette mélange à un substrat et la formation d'un électrode poreux ayant une couche catalytique sur le substrat par pression du substrat sous chauffage.
